# EUROPÄISCHE PATENTSCHRIFT

(11) **EP 0 310 968 B1**
(45) Veröffentlichungstag und Bekanntmachung des Hinweises auf die Patenterteilung: **24.02.1993**
(21) Anmeldenummer: 88116241.6
(22) Anmeldetag: 30.09.1988
(51) Int. Cl.: B29B 13/00, B29B 13/02, C08G 63/80, B29K 67/00

(54) **Verfahren und Vorrichtung zum Kristallisieren von amorphem Kunststoffgranulat**
Method of and apparatus for crystallising amorph plastic granules
Procédé et dispositif pour la cristallisation de granules synthétiques amorphes

(30) Priorität: 06.10.1987 DE 3733793
(43) Veröffentlichungstag der Anmeldung: 12.04.1989
(73) Patentinhaber: Gräff, Roderich Wilhelm, Dr.-Ing., D-64291 Darmstadt-Arheilgen (DE)
(72) Erfinder: Gräff, Roderich Wilhelm, Dr.-Ing., D-64291 Darmstadt-Arheilgen (DE)
(74) Vertreter: Zinngrebe, Horst, Dr.rer.nat.

(56) Entgegenhaltungen:
- DD-A- 158 528
- DE-A- 2 118 434
- DE-B- 2 558 730
- DE-B- 2 642 102
- SU-A- 1 022 729
- US-A- 4 276 261

## Beschreibung

Die Erfindung betrifft ein Verfahren zum Kristallisieren wenigstens der Außenhaut von Körnern eines amorphen Kunststoffgranulates, vorzugsweise thermoplastischem Polyester (PETP), bei dem einem Rührtrichter Heizgas mit einer oberhalb der Kristallisationstemperatur des Granulats liegenden Eintrittstemperatur zugeführt und durch das den Rührtrichter durchsinkende Granulat im Gegenstrom geleitet wird, wobei das Granulat auf Kristallisationstemperatur erhitzt und anschließend entnommen wird, dadurch gekennzeichnet, daß die Entnahmetemperatur des Granulats erfaßt und die in den Rührtrichter eingeleiteten Wärmenenge derart gesteuert wird, daß die Eintrittstemperatur des Heizgases oberhalb eines vorgegebenen Wertes der Entnahmetemperatur des Granulats liegt. Die Erfindung betrifft ferner eine zur Durchführung des Verfahrens geeignete Vorrichung.

Kunststoffgranulate, wie etwa thermoplastischer Polyester (Polyethylenterephtalat PETP), können in amorpher oder in kristalliner Form vorliegen. Zur Umformung des Granulats von amorphen in den kristallinen Zustand wird das Granulat durch Heizgas auf die Kristallisationstemperatur aufgewärmt, die für den erwähnten Polyester bei etwa 90°C bis 110°C liegt.

Aus der Deutschen Offenlegungsschrift 26 42 102 ist es bekannt, das Granulat in einen mit einem Rührwerk ausgerüsteten Rührtrichter einzufüllen, welchen es bei langsam drehendem Rührwerk durchsinkt. Gleichzeitig wird in den Rührtrichter ein Heizgas wie etwa Luft oder Stickstoff im Gegenstrom zur Sinkbewegung des Granulats von unten eingeblasen. Das Heizgas, dessen Eintrittstemperatur auf kurz oberhalb der Kristallisationstemperatur, im erwähnten Beispiel auf etwa 125°C, eingestellt ist, durchstreicht das Granulat und erwärmt dieses auf die Kristallisationstemperatur.

Um sicherzustellen, daß das Granulat hinreichend kristallisiert ist, hat man bislang die Temperatur des den Rührtrichter durch den Heizgasauslaß verlassenden Heizgases erfaßt. Wenn diese Auslaßtemperatur von der Temperatur des frisch in den Rührtrichter eingefüllten Granulats, die etwa bei Raumtemperatur liegt, auf die Eintrittstemperatur angestiegen ist, war man sicher, daß die Kristallisation des Granulats im erwünschten Umfang stattgefunden hat, so daß kristallisiertes Granulat aus dem Rührtrichter entnommen werden konnte. Das bedeutet außerdem, daß das kristallisierte Granulat auf die Eintrittstemperatur des Heizgases erhitzt und mit dieser Temperatur aus dem Rührtrichter entnommen wird.

Dieses Verfahren hat jedoch mehrere Nachteile. Zum einen ist die Verweilzeit einer Granulatfüllung im Rührtrichter sehr lang, sie beträgt üblicherweise zwei Stunden und mehr. Entsprechend gering ist die stündliche Menge an kristallisiertem Granulat. Ferner entstehen relativ hohe Wärmeverluste aufgrund der hohen Auslaßtemperatur des Heizgases. Schließlich ist eine kontinuierliche Entnahme von kristallisiertem Granulat aus dem Rührtrichter kaum möglich, weil nach jedem Beschicken des Rührtrichters mit amorphem und kaltem Granulat bis zum erneuten Ansteigen der Auslaßtemperatur mit der Graulatentnahme gewartet werden muß.

Der Erfindung liegt daher die Aufgabe zugrunde, ein Verfahren zum wenigstens Teilkristallisieren von amorphem Kunststoffgranulat anzugeben, welches unter Verminderung der bislang aufgetretenen Wärmeverluste eine kontinuierliche Entnahme von kristallisiertem Granulat aus dem Rührtrichter erlaubt. Ferner soll eine Vorrichtung geschaffen werden, die die Durchführung des neu zu entwickelnden Verfahrens gestattet.

Bei dem eingangs angegebenen Verfahren ist dazu erfindungsgemäß vorgesehen, daß die Entnahmetemperatur des Granulats erfaßt und die Eintrittstemperatur des Heizgases derart gesteuert wird, daß sie oberhalb eines vorgegebenen Wertes der Entnahmetemperatur des Ganulats liegt.

Bei einer anderen Lösung der genannten Aufgabe ist bei dem eingangs angegebenen Verfahren erfindungsgemäß vorgesehen, daß die Entnahmetemperatur des Granulats erfaßt und die Entnahmegeschwindigkeit des Granulats aus dem Rührtrichter derart gesteuert wird, daß die Eintrittstemperatur des Heizgases oberhalb eines vorgegebenen Wertes der Entnahmetemperatur des Granulats liegt.

Es hat sich nämlich gezeigt, daß es für die erwünschte Kristallisation ausreicht, das Granulat in einer im Rührtrichter axial wesentlich kürzeren Zone zu erwärmen, was durch Beibehaltung einer Eintrittstemperatur des Heizgases oberhalb der Entnahmetemperatur des Granulats erreicht wird. Die Kenntnis der Auslaßtemperatur des Heizgases wird damit für die Überwachung der Kristallisation entbehrlich. Die Erfindung verringert die Wärmeverluste, weil das Heizgas den Rührtrichter mit der Temperatur des eingefülten Granulats, also etwa Raumtemperatur, verlassen kann. Die vom eintretenden Heizgas mitgeführte Wärmemenge wird vollständig zur Kristallisation ausgenutzt.

Ferner ermöglicht die Erfindung einen kontinuierlichen Betrieb des Rührtrichters. Bei gleicher Rührtrichtergröße steigt die Kristallisationsleistung, ausgedrückt als Granulatdurchsatz pro Stunde, sehr stark an.

Bevorzugte Ausgestaltungen des erfindungsgemäßen Verfahrens sind in den Unteransprüchen angegeben.

Zur Durchführung des Verfahrens eignet sich eine Vorrichtung mit einem Rührtrichter, der oben eine Granulateinfüllöffnung sowie einen Heizgasauslaß und unten einen Heizgaseinlaß sowie unterhalb des Heizgaseinlasses einen Granulatentnahmestutzen und im Inneren ein Rührwerk aufweist, wobei ein Temperaturfühler am Rührtrichter befestigt ist, dessen Meßkopf im Granulat in der Nähe des Heizgaseinlasses angeordnet ist und eine Steuerung vorgesehen ist, welche Ausgangssignale aus dem Temperaturfühler aufnimmt und die vom Heizgas zugeführte Wärmemenge oder die Entnahmegeschwindigkeit des Granulats in Abhängigkeit von den Ausgangssignalen steuert. Zweckmäßig weist die Vorrichtung für den Durchtritt des Granulats sowie des Heizgases in der Nähe des Heizgaseinlasses eine verengte lichte Weite auf. Die im Bereich der verengten dichten Weite erhöhte Relativgeschwindigkeit zwischen den Granulat-Körnern und dem Heizgas verbessert den Übergang der Wärmeenergie aus dem Heizgas auf das Granulat, was besonders für Volumenströme des Heizgases bedeutsam ist, die kleiner als bisher sind. Es zeigt sich, daß die sich durch die Erfindung einstellende kurze Kristallisationszeit von drei bis zehn Minuten völlig ausreicht, um das Kunststoffgranulat je nach Art und Korngröße ganz oder zumindest an der Oberfläche soweit teilzukristallisieren, daß ein verkleben des Granulats bei der späteren Lagerung oder Weiterverarbeitung nicht mehr eintreten kann. Dadurch, daß der Bereich der Umformung von amorph zu kristallin auf einen relativ kleinen Volumenteil des Rührtrichters beschränkt bleibt, kann die Duruchmischung des Granulats durch das Rührwerk auf diesen Bereich beschränkt bleiben, so daß das Rührwerk einfacher gestaltet sein kann und weniger Antriebsenergie erfordert.

Eine bevorzugte Ausführungsform der erfindungsgemäßen Vorrichtung sieht vor, daß der Rührtrichter im Inneren und in der Nähe des Heizgaseinlasses eine umlaufende Wand aufweist, die sich von der Innenfläche der Außenwand des Rührtrichters schräg nach innen und unten erstreckt und eine mittlere Durchtrittsöffnung für das Granulat und das Heizgas bildet. Auf diese Weise läßt sich die genannte Querschnittsverengung des Rührtrichters in konstruktiv einfacher Form verwirklichen.

Darüber hinaus läßt sich der Strömungsquerschnitt für die Granulatskristallisation besonders günstig gestalten, wenn in Weiterbildung der erfindungsgemäßen Vorrichtung im Inneren des Rührtrichters eine weitere umlaufende Wand mit Abstand zur Außenwand befestigt ist, welche sich zur Bildung eines in die verengte lichte Weite bzw. in die Durchtrittsöffnung mündenden, nach unten und innen geneigten Ringraumes nach unten und innen erstreckt und einen von Granulat und Heizgas freien Kern umschließt. Bevorzugterweise ist die weitere Wand zur Achse des Rührtrichters merkbar flacher geneigt als der Schüttwinkel des zu kristallisierenden Granulats. Diese Neigung ist zweckmäßig geringer als diejenige der ersten Wand. Durch diese Gestaltung der erfindungsgemäßen Vorrichtung wird sichergestellt, daß in dem relativ engen Ringraum, durch den das Granulat nach unten langsam hindurchtreten muß, keine Möglichkeit zur Bildung von Heizgasräumen besteht, der Ringraum vielmehr ständig voll mit Granulat gefüllt bleibt.

Ein besonders gleichmaßiges und nischenlöses Durchsinken des Granulats durch den Ringraum ergibt sich, wenn in Weiterbildung der Erfindung die weitere Wand der untere Teil eines Doppelkonus ist, welcher an einer den Rührtrichter axial durchsetzenden Welle mit axial beabstandeten Rührflügeln befestigt ist, wobei das untere Ende des Doppelkonus und damit der weiteren Wand etwa in Höhe der verengten lichten Weite liegt. Der den Kern umschließende Doppelkonus kann dann im oberen Teil stärker zur Welle geneigt sein als sein unterer Teil.

Von den weiteren, in den Unteransprüchen angegebenen Ausführungsformen der Erfindung sind vor allem hervorzuheben ein erster Temperaturfühler, dessen Tastkopf kurz unterhalb der verengten lichten Weite des Rührtrichters im Granulat angeordnet ist. Dieser Temperaturfühler zeigt die Granulattemperatur axial kurz unterhalb der Kristallisationszone an, welche von der Eintrittstemperatur merkbar abweichen kann. Dieser Temperaturfühler ermöglicht eine Regelung der Eintrittstemperatur derart, daß ein zu starkes Aufheizen des Granulats und damit die Gefahr von un erwünschten Veränderungen im Granulat vermieden werden kann.

Ein zweiter Temperaturfühler kann vorteilhafterweise kurz oberhalb des Granualtentnahmestutzens vorgesehen sein, der eine Sicherheitsüberwachung daraufhin ermöglicht, daß nur kristallines Granulat aus dem Rührtrichter entnommen werden kann.

Schließlich erweist es sich als besonders vorteilhaft, eine Steuerung vorzusehen, welche Ausgangssignale der beiden Temperaturfühler sowie eines dritten Temperaturfühlers aufnimmt, welche die Eintrittstemperatur erfaßt und die Wärmeabgabe einer Heizung für das Heizgas steuert.

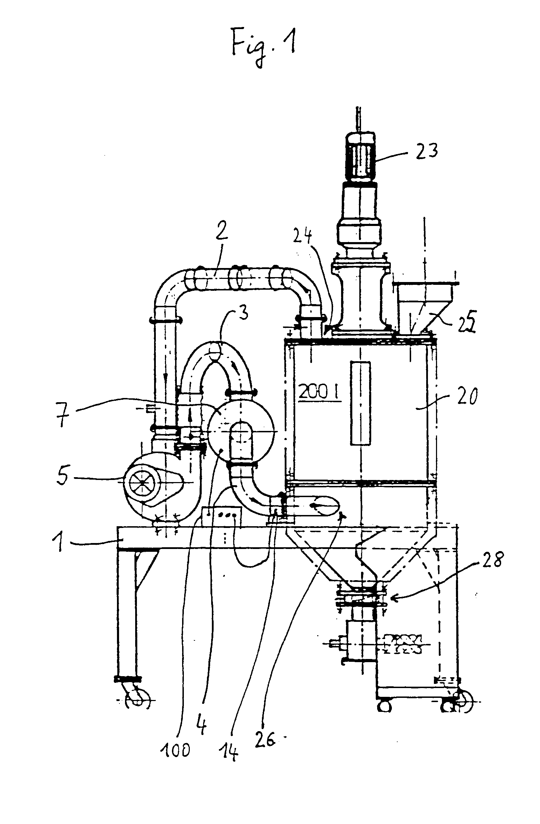

Die Erfindung wird nachstehend an einem Ausführungsbeispiel erläutert, dessen Einzelheiten den vorstehend dargelegten Erfindungsgedanken jedoch nicht beschränken sollen. Auf die beigefügte Zeichnung wird Bezug genommen, von der
- Figur 1: eine Seitenansicht einer mit den Merkmalen der Erfindung ausgerüsteten Vorrichtung und
- Figur 2: einen vertikalen Axialschnitt durch den in Figur 1 dargestellten Rührtrichter zeigen.

Die in der Zeichnung dargestellte Vorrichtung dient zur Kristallisation wenigstens der Außenhaut von Körnern eines Polyethylenterephthalatgranulats und umfaßt einen Rührtrichter 20, ein Gebläse 5 und eine Heizung 7, die zusammen mit den sie verbindenen Luftleitungsrohren auf einem hier verfahrbaren Gestell 1 montiert sind.

Gebläse 5 und Heizung 7 sind von üblicher Bauart, wobei zur Heizung 7 ergänzend zu vermerken ist, daß die von ihr an das sie durchströmende Heizgas abgebbare Wärme durch eine Steuerung 100 steuerbar ist. Für die Erfindung ist nur wichtig, daß der Heizgasauslaß 24 des Rührtrichters 20 über eine Luftleitung 2 mit der Ansaugöffnung des Gebläses 5 verbunden ist, daß der Druckluftauslaß des Gebläses 5 über eine weitere Luftleitung 3 mit dem Einlaß der Heizung 7 und der Auslaß der Heizung 7 mit dem Heizgaseinlaß 26 des Rührtrichters 20 über eine weitere Luftleitung 4 gekoppelt ist. Unmittelbar vor dem Heizgaseinlaß 26 ist in der Luftleitung 4 ein dritter Temperaturfühler 14 vorgesehen, dessen Funktion noch erläutert wird.

Der Rührtrichter weist einen zylindrischen Korpus auf, der unten zu einem Granulatentnahmestutzen 28 konisch zuläuft. Auf dem Deckel 21 des Korpus ist ein Elektromotor 23 als Antrieb für eine Welle 80 eines Rührwerkes aufgesetzt, welche den Korpus axial bis kurz vor den Granulatentnahmestutzen 28 durchsetzt. Der Korpus setzt sich zusammen aus einem zylindrischen Oberteil 62, an dessen unterem Ende ein Untersatz 70 befestigt ist, welcher einen zylindrischen Abschnitt 71 und einen mit dem Granulatentnahmestutzen 28 versehenen konischen Abschnitt 72 aufweist.

Der Deckel 21 besitzt außermittig eine Granulateinfüllöffnung 22 mit aufgesetztem Einfülltrichter 25 sowie den bereits erwähnten Heizgasauslaß 24.

Von der Innenseite der Außenwand 44 des Oberteils 62 stehen mehrere parallel zur Quelle 80 gleichmäßig beabstandete Arme 41, 43, 45, 47 radial nach innen um etwa die halbe Distanz zur Welle 80 vor, deren Profil das von oben auftreffende Granulat nach oben oder seitlich, jedenfalls nicht nach unten ablenkt.

An der Welle 80 sind mehrere axial gleichmäßig beabstandete und sich radial im wesentlichen bis zur Außenwand 44 erstreckende Rührarme 82, 84, 86, 88 derart befestigt, daß je zwei axial benachbarte Rührarme bei Drehung der Welle 80 zwischen je zwei axial benachbarten Armen 41, 43, 45, 47 durchfahren. Das Profil der Rührarme stellt sicher, daß beim Rühren durch das Granulat 10 kein in Sinkrichtung des Granulats wirkender Druck auf dieses ausgeübt wird.

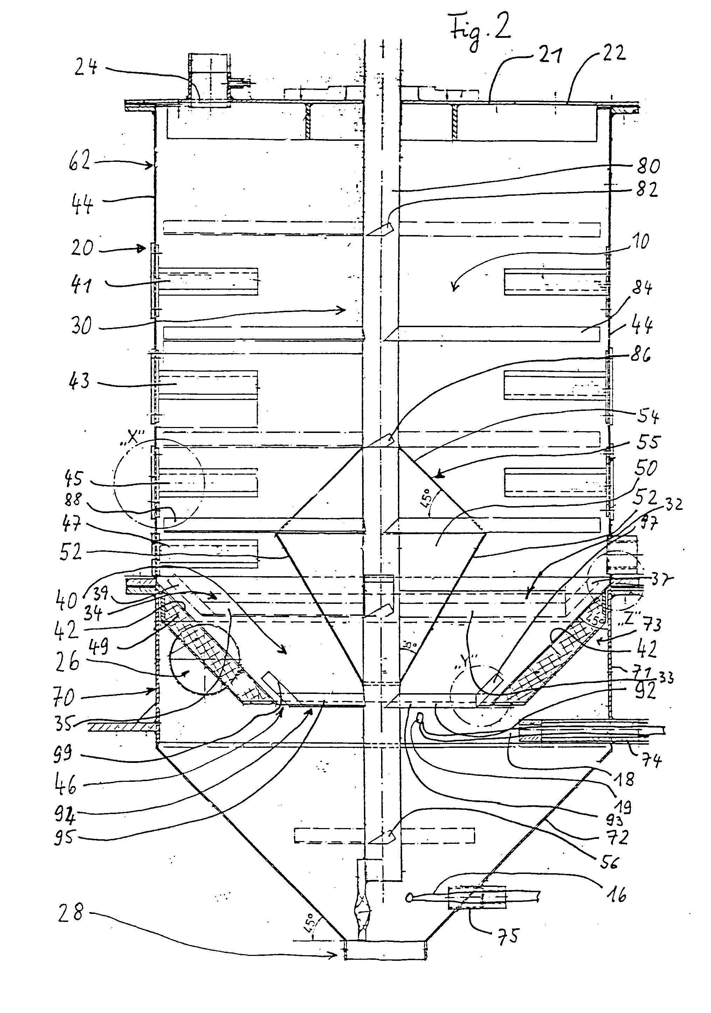

An der Innenwand des Abschnittes 71 ist eine erste, sich zur Innenwand unter einem Winkel von 45° nach innen und unten erstreckende konische Wand 42 befestigt, die um die Welle 80 eine kreisrunde Durchtrittsöffnung 46 freiläßt. Wie aus Figur 2 zu erkennen ist, beträgt der Durchmesser der Durchtrittsöffnung 46 ungefähr die Hälfte des Innendurchmessers des Abschnittes 71. Auf der zur Innenwand des Abschnittes 71 zuweisenden Unterseite ist die Wand 42 dick thermisch isoliert durch eine Isolationsauflage 49, welche unten quer zur Welle 80 endet. In den zwischen der Isolationsauflage 49 und der Innenwand des Abschnittes 71 gebildeten Keilraum 73 mündet im wesentlichen tangential zur Innenwand die Luftleitung 4 durch den Heizgaseinlaß 26.

An der Welle 80 ist ein erstes Rührarmpaar mit einander gegenüberliegenden Rührarmen 92, 94 so befestigt, daß das Rührarmpaar bei drehender Welle 80 in der Durchtrittsöffnung 46 dreht. Jeder Rührarm 92, 94 weist einen von der Welle 80 radial abstehenden Teil 93, 95 auf, an den sich ein jeweils parallel zur konischen Wand 42 verlaufender Endabschnitt 97, 99 anschließt.

Die Welle 80 trägt ferner einen Doppelkonus 55, dessen unteres Ende kurz oberhalb der Rührarme 92, 94 und damit kurz oberhalb der Durchtrittsöffnung 46 liegt. Der Doppelkonus 55 setzt sich aus einem haubenförmigen, sich nach unten konisch erweiternden oberen Teil 54 und einem anschließenden sich nach unten konisch verjüngenden Teil 52 zusammen. Beide Teile 52 und 54 sind soweit dicht miteinander und mit der Welle 80 verbunden, daß weder Granulat noch nennenswert Heizgas in den vom Doppelkonus umschlossenen Kern 50 eindringen können. Der untere Teil 52 reicht gemäß Figur 2 wesentlich über den von der Wand 42 umschlossenen Raum nach oben hinaus.

Auf diese Weise wird zwischen der Wand 42 und der weiteren Wand 52 des unteren Doppelkonusteils ein Ringraum 40 definiert, der sich nach unten und schräg zur Durchtrittsöffnung 46 hin erstreckt und von dem Granulat durchströmt werden muß. Dabei ist zu beachten, daß die Steigung der Wand 52 steiler ist als der Schüttwinkel des im Ringraum 40 zu kristallisierenden Granulats. Bei der hier beispielhaft beschriebenen Verarbeitung von Polyethylenterephthalatgranulat schließt die Wand 52 demzufolge einen Winkel von etwa 30° mit der Welle 80 ein. Dagegen ist der obere Teil 54 des Doppelkonus etwa um 45° gegen die Welle 80 geneigt.

An der Welle 80 ist ein zweites Rührarmpaar mit einander gegenüberliegenden und von der Welle 80 radial abstehenden Rührarmen 32, 34 befestigt, deren wellennahe radiale Teile 33, 35 die Wand 52 durchdringen und deren freie zur Wand 42 parallel abgewinkelte Endteile 37, 39 mit dem oberen Rand der Wand 42 enden. Wie aus Figur 2 zu entnehmen ist, sind die Rührarme 32, 34 im Verhältnis zu den Rührarmen 92, 94 rechtwinklig versetzt an der Welle 80 befestigt. Bei drehender Welle 80 durchfahren die Rührarme 32, 34 daher den oberen Abschnitt des Ringraumes 40.

Ein weiteres Rührarmpaar ist im konischen Abschnitt 72 an der Welle befestigt, in Figur 2 ist nur der Rührarm 56 dieses Rührarmpaares eingezeichnet.

Am Übergang des Abschnittes 71 zum Abschnitt 72 ist eine Halterung 74 für einen ersten Temperaturfühler 18 vorgesehen, dessen Tastkopf 19 kurz unterhalb der Durchtrittsöffnung 46 gehalten ist, und zwar etwa mittig zwischen der Welle 80 und dem Rand der Durchtrittsöffnung.

Oberhalb des Granulatentnahmestutzens 28 ist am Abschnitt 72 eine weitere Halterung 75 für einen zweiten Temperaturfühler 16 vorgesehen, dessen Tastkopf etwa in der axialen Mitte des Abschnittes unter dem unteren Ende der Welle 80 gehalten ist.

Nicht dargestellt sind Ausgangssignalleitungen der Temperaturfühler 16, 18, welche zu entsprechenden Eingängen der Steuerung 100 führen. Die Steuerung 100 enthält einen Regelkreis, der das Ausgangssignal aus dem ersten Temperaturfühler 18 als Istsignal der Temperatur des kristallisierten Granulats mit einem gespeicherten Sollwert von beispielsweise 120°C vergleicht und ein sich aus dem Vergleich ergebendes Stellsignal der Heizung 7 zur Steuerung der von ihr abgegebenen Wärme zuführt. Die sich aus dem Vergleich ergebende Erhöhung oder Erniedrigung der Eintrittstemperatur der Luft wird von der Steuerung 100 anhand des Ausgangsignals aus dem dritten Temperaturfühler 14 überwacht. Dabei beeinflußt die Steuerung 100 die Heizung 7 so, daß die Eintrittstemperatur der Luft im Bereich zwischen 140°C und 180°C, also erheblich über der Kristallisationstemperatur des Granulats jedoch deutlich unter seiner Erweichungstemperatur von 250°C im Ringraum 40 bleibt. Es versteht sich, daß die Steuerung nur aus Gründen der besseren Darstellung separat dargestellt ist, sie wird selbstverständlich in eines oder in mehrere der vorhandenen Bauteile integriert sein.

Im Betrieb wird PETP-Granulat in den Ruhrtrichter 20 durch die Einfüllöffnung 22 bis zu einem durch einen nicht dargestellten Füllstandanzeiger angegebenen Füllstand eingegeben. Das Granulat hat gewöhnlich Raumtemperatur. Die Zugabe von Granulat erfolgt kontinuierlich, so daß der angegebene Füllstand dauernd erhalten bleibt. Sodann wird durch den Heizgaseinlaß Luft von einer Temperatur zwischen etwa 140°C und etwa 180°C in den Rührtrichter 20 eingeblasen, deren Temperatur von der Steuerung in dem bezeichneten Bereich gehalten wird und wesentlich höher liegt als die Kristallisationstemperatur von etwa 90°C bis 110°C. Die heiße Luft strömt unter der Isolationsschicht 49 nach radial einwärts um den Rand der Durchtrittsöffnung herum in das Granulat und durch dieses hindurch im Rührtrichter nach oben, welchen sie durch den Heizgasauslaß 24 verläßt. Hat die vom ersten Temperaturfühler 18 erfaßte Temperatur einen Wert von etwa 120°C erreicht, kann dies als Aussage darüber verstanden werden, daß das durch die Durchtrittsöffnung 46 nach unten sinkende Granulat in der erwünschten Weise kristallisiert ist. Demzufolge kann kristallisiertes Granulat durch den Granulatentnahmestutzen 28 entnommen werden.

Sinkt die vom ersten Temperaturfühler 18 gemeldete Temperatur unter etwa 120°C ab, kann die Steuerung 100 die Heizung 7 zu erhöhter Wärmeabgabe an die sie durchströmende Luft veranlassen, so daß die Eintrittstemperatur sich in Richtung auf den oberen Grenzwert von etwa 180°C bewegt, was vom dritten Temperaturfühler 14 der Steuerung 100 gemeldet wird. Alternativ oder ergänzend zur Erhöhung der Wärmeabgabe durch die Heizung 7 kann die Entnahmegeschwindigkeit des kristallisierten Granulats durch den Stutzen 28 gedrosselt werden. Dies wird möglich beispielsweise durch eine steuerbare, an den Stutzen 28 angeschlossene Zellenradschleuse, die eine Steuerung der Granulatentnahmegeschwindigkeit erlaubt.

Steigt die vom ersten Temperaturfühler 18 gemeldete Temperatur über 120°C an, drosselt die Steuerung 100 die Warmeabgabe der Heizung 7 an die Luft, oder die Entnahmegeschwindigkeit des kristallisierten Granulats wird durch die Zellenradschleuse erhöht, bis die gemeldete Temperatur wieder auf etwa 120°C abgesunken ist.

Der zweite Temperaturfühler 16 dient als Kontrolle dafür, daß die Temperatur des den Rührtrichter 20 verlassenden Granulats tatsächlich bei 120°C liegt. Da der zweite Temperaturfühler 16 unterhalb der Heißluftleitung in dem Rührtrichter liegt, kann die von ihm erfaßte Temperatur von Heizgas nicht verfälscht werden.

Zur einwandfreien Kristallisation des Granulats im Ringraum 40 ist es nicht erforderlich, daß das den Ruhrtrichter durchsinkende Granulat oberhalb des Ringraumes 40 gerührt wird. Die oben beschriebenen Rührarme 82, 84, 86 können daher entfallen, soweit sie oberhalb des unteren Teils 52 angeordnet sind.

In der Figur 2 sind alle ausgezogen dargestellten Rührarme in ihrer Stellung nach Drehung der Welle 80 um 90° gestrichelt eingetragen.

## Patentansprüche

1. Verfahren zum Kristallisieren wenigstens der Außenhaut von Körnern eines amorphen Kunststoffgranulates, vorzugsweise thermoplastisches Polyester (PETP), bei dem einem Rührtrichter Heizgas mit einer oberhalb der Kristallisationstemperatur des Granulats liegenden Eintrittstemperatur zugeführt und durch das den Rührtrichter durchsinkende Granulat im Gegenstrom geleitet wird, wobei das Granulat auf Kristallisationstemperatur erhitzt und anschließend entnommen wird, dadurch gekennzeichnet, daß die Entnahmetemperatur des Granulats erfaßt und die Eintrittstemperatur des Heizgases derart gesteuert wird, daß sie oberhalb eines vorgegebenen Wertes der Entnahmetemperatur des Granulats liegt.

2. Verfahren zum Kristallisieren wenigstens der Außenhaut von Körnern eines amorphen Kunststoffgranulats, vorzugsweise thermoplastisches Polyester (PETP), bei dem einem Rührtrichter Heizgas mit einer oberhalb der Kristallisationstemperatur des Granulats liegenden Eintrittstemperatur zugeführt und durch das den Rührtrichter durchsinkende Granulat im Gegenstrom geleitet wird, wobei das Granulat auf Kristallisationstemperatur erhitzt und anschließend entnommen wird, dadurch gekennzeichnet, daß die Entnahmetemperatur des Granulats erfaßt und die Entnahmegeschwindigkeit des Granulats aus dem Rührtrichter (20) derart gesteuert wird, daß die Eintrittstemperatur des Heizgases oberhalb eines vorgegebenen Wertes der Entnahmetemperatur des Granulats liegt.

3. Verfahren nach Anspruch 1 oder 2, dadurch gekennzeichnet, daß als Heizgas Luft eingesetzt wird.

4. Verfahren nach Anspruch 1 oder 2, dadurch gekennzeichnet, daß als Heizgas Stickstoff eingesetzt wird.

5. Verfahren nach einem der Ansprüche 1 bis 4, dadurch gekennzeichnet, daß die Eintrittstemperatur des Heizgases in einem Bereich von etwa 140° Celsius gehalten wird.

6. Vorrichtung zur Durchführung des Verfahrens nach einem der Ansprüche 1 bis 5 mit einem Rührtrichter (20), der oben eine Granulateinfüllöffnung (22) sowie einen Heizgasauslaß (24) und unten einen Heizgaseinlaß (26) sowie unterhalb des Heizgaseinlasses einen Granulatentnahmestutzen (28) und im Inneren ein Rührwerk (30) aufweist, dadurch gekennzeichnet, daß ein Temperaturfühler (18) am Rührtrichter befestigt ist, dessen Meßkopf (19) im Granulat in der Nähe des Heizgaseinlasses (26) angeordnet ist, und daß eine Steuerung (100) vorgesehen ist, welche Ausgangssignale aus dem Temperaturfühler (18) aufnimmt und die von dem Heizgas zugeführte Wärmemenge oder die Entnahmegeschwindigkeit des Granulats aus dem Rührtrichter in Abhängigkeit von den Ausgangssignalen steuert.

7. Vorrichtung nach Anspruch 6, dadurch gekennzeichnet, daß der Rührtrichter (20) für den Durchtritt des Granulats (10) sowie des Heizgases in der Nähe des Heizgaseinlasses (26) eine verengte lichte Weite besitzt.

8. Vorrichtung nach Anspruch 7, dadurch gekennzeichnet, daß der Rührtrichter im Inneren eine feststehende, trichterförmige Wand (42) mit einer mittleren Durchtrittsöffnung (46) aufweist, die sich von der Innenfläche der Außenwand (44) des Rührtrichters (20) schräg nach innen und unten erstreckt.

9. Vorrichtung nach Anspruch 7 oder 8, dadurch gekennzeichnet, daß im Inneren des Rührtrichters (20) eine am Rührwerk befestigte Wand (52) mit Abstand zur Außenwand zur Bildung der verengten lichten Weite befestigt ist, welche einen von Granulat (10) und Heizgas freien Kern (50) umschließt.

10. Vorrichtung nach Anspruch 8 oder 9, dadurch gekennzeichnet, daß die am Rührwerk befestigte Wand (52) steiler ist als der Schüttwinkel des zu kristallisierenden Granulats (10) im Rührtrichter.

11. Vorrichtung nach einem der Ansprüche 9 oder 10, dadurch gekennzeichnet, daß der Rührtrichter ein zylindrisches Oberteil (62) aufweist, welches auf einem zum Granulatentnahmestutzen (28) konisch zulaufenden Untersatz (70) befestigt ist, wobei sich durch den Rührtrichter axial eine Welle (80) erstreckt, an welcher axial beabstandete Rührflügel (82,84,...) sowie ein Doppelkonus (55) befestigt sind, dessen unteres Ende etwa in der Höhe der verengten lichten Weite liegt.

12. Vorrichtung nach Anspruch 11, dadurch gekennzeichnet, daß der den Kern (50) umschließende Doppelkonus im oberen Teil (54) axial kürzer ist als im unteren Teil (52).

13. Vorrichtung nach Anspruch 11 oder 12, dadurch gekennzeichnet, daß wenigstens einer der Rührflügel (92) in der Durchtrittsöffnung (46) der trichterförmigen Wand (42) angeordnet ist.

14. Vorrichtung nach einem der Ansprüche 8 bis 13, dadurch gekennzeichnet, daß die feststehende Wand (42) oberhalb des Heizgaseinlasses (26) an der Außenwand (44) befestigt und an ihrer Unterseite thermisch isoliert ist.

15. Vorrichtung nach einem der Ansprüche 8 bis 14, dadurch gekennzeichnet, daß die feststehende Wand (42) in einem Winkel von etwa 45° gegen die Außenwand geneigt ist.

16. Vorrichtung nach einem der Ansprüche 9 bis 15, dadurch gekennzeichnet, daß die am Rührwerk befestigte Wand (52) in einem Winkel von etwa 30° gegen die Achse des Rührtrichters (20) geneigt ist.

17. Vorrichtung nach einem der Ansprüche 8 bis 16, dadurch gekennzeichnet, daß der Durchmesser der Durchtrittsöffnung (46) etwa die Hälfte der unverengten lichten Weite des Rührtrichters (20) beträgt.

18. Vorrichtung nach einem der Ansprüche 6 bis 17, dadurch gekennzeichnet, daß der Temperaturfühler (18) kurz unterhalb der verengten lichten Weite angeordnet ist.

19. Vorrichtung nach einem der Ansprüche 6 bis 18, dadurch gekennzeichnet, daß ein zweiter Temperaturfühler (16) am Rührtrichter (20) kurz oberhalb des Granulatentnahmestutzens (28) befestigt ist.

20. Vorrichtung nach einem der Ansprüche 6 bis 19, dadurch gekennzeichnet, daß ein dritter Temperaturfühler (14) vor dem Heizgaseinlaß vorgesehen ist, und an die Steuerung (100) angeschlossen ist.

## Claims

1. A process for crystallizing at least the outer skin of grains of an amorphous plastics granular material, preferably thermoplastic polyester (PETP), in which hot gas is supplied to a stirring funnel at an entry temperature above the crystallization temperature of the granular material and is fed in counterflow through the granular material passing through the stirring funnel, the granular material being heated to crystallization temperature and then being removed, **characterized in that** the removal temperature of the granular material is detected and the entry temperature of the hot gas is controlled in such a way that it is above a pre-set value of the removal temperature of the granular material.

2. A process for crystallizing at least the outer skin of grains of an amorphous plastics granular material, preferably thermoplastic polyester (PETP), in which hot gas is supplied to a stirring funnel at an entry temperature above the crystallization temperature of the granular material and is fed in counterflow through the granular material passing through the stirring funnel, the granular material being heated to crystallization temperature and then being removed, **characterized in that** the removal temperature of the granular material is detected and the speed of removal of the granular material from the stirring funnel (20) is controlled in such a way that the entry temperature of the hot gas is above a pre-set value of the removal temperature of the granular material.

3. A process according to Claim 1 or 2, **characterized in that** air is used as the hot gas.

4. A process according to Claim 1 or 2, **characterized in that** nitrogen is used as the hot gas.

5. A process according to one of Claims 1 to 4, **characterized in that** the entry temperature of the hot gas is kept in a range of approximately 140°C.

6. A device for performing the process according to one of Claims 1 to 5, having a stirring funnel (20) provided at the top with a granular-material filling opening (22) and a hot-gas outlet (24) and at the bottom with a hot-gas inlet (26) and, below the hot-gas inlet, with a granular-material removal connector (28) and, in the inside, with a stirring device (30), **characterized in that** a temperature sensor (18) is secured to the stirring funnel, the measuring head (19) of which is situated in the granular material in the vicinity of the hot-gas inlet (26), aid a control means (100) is provided which receives output signals from the temperature sensor (18) and controls the quantity of heat supplied by the hot gas or the speed of removal of the granular material from the stirring funnel as a function of the output signals.

7. A device according to Claim 6, **characterized in that** the stirring funnel (20) has a constricted internal width in the vicinity of the hot-gas inlet (26) for the passage of the granular material (10) and the hot gas.

8. A device according to Claim 7, **characterized in that** the interior of the stirring funnel has a stationary, funnel-shaped wall (42) with a central through opening (46) extending obliquely inwards and downwards from the inner face of the outer wall (44) of the stirring funnel (20).

9. A device according to Claim 7 or 8, **characterized in that** a wall (52), which is secured to the stirring device and which surrounds a core (50) free of granular material (10) and hot gas, is secured in the interior of the stirring funnel (20) at a distance from the outer wall in order to form the constricted internal width.

10. A device according to Claim 8 or 9, **characterized in that** the wall (52) secured to the stirring device is steeper than the angle of repose of the granular material (10) to be crystallized in the stirring funnel.

11. A device according to one of Claims 9 or 10, **characterized in that** the stirring funnel has a cylindrical upper part (62) secured to a base (70) which tapers to the granular-material connector (28), wherein a shaft (80), on which are secured axially spaced stirring vanes (82, 84, ...) and a double cone (55) whose lower end is situated approximately at the level of the constricted internal width, extends axially through the stirring funnel.

12. A device according to Claim 12, **characterized in that** the double cone surrounding the core (50) is axially shorter in the upper part (54) than in the lower part (52).

13. A device according to Claim 11 or 12, **characterized in that** at least one of the stirring vanes (92) is arranged in the through opening (46) of the funnel-shaped wall (42).

14. A device according to one of Claims 8 to 13, **characterized in that** the stationary wall (42) is secured to the outer wall (44) above the hot-gas inlet (26) and is thermally insulated on its underside.

15. A device according to one of Claims 8 to 14, **characterized in that** the stationary wall (42) is inclined at an angle of approximately 45° to the outer wall.

16. A device according to one of Claims 9 to 15, **characterized in that** the wall (52) secured to the stirring device is inclined at an angle of approximately 30° to the axis of the stirring funnel (20).

17. A device according to one of Claims 8 to 16, **characterized in that** the diameter of the through opening (46) amounts to approximately half of the unconstricted internal width of the stirring funnel (20).

18. A device according to one of Claim 6 to 17, **characterized in that** the temperature sensor (18) is arranged slightly above the constricted internal width.

19. A device according to one of Claims 6 to 18, **characterized in that** a second temperature sensor (16) is secured to the stirring funnel (20) slightly above the granular material removal connector (28).

20. A device according to one of Claims 6 to 19, **characterized in that** a third temperature sensor (14) is provided upstream of the hot-gas inlet, and is attached to the control means (100).

## Revendications

1. Procédé pour la cristallisation au moins de la peau extérieure de grains d'un granulat amorphe de matière plastique, de préférence polyester thermoplastique (PETP), dans lequel du gaz chaud est amené à un entonnoir agitateur avec une température d'entrée située au-dessus de la température de cristallisation du granulat et est dirigé dans le contre-courant à travers le granulat descendant à travers l'entonnoir agitateur, le granulat étant chauffé à la température de cristallisation et puis prélevé, caractérisé en ce que la température de prélèvement du granulat est enregistrée et la température d'entrée du gaz chaud est commandée de manière qu'elle se situe au-dessus d'une valeur prédéfinie de la température de prélèvement du granulat.

2. Procédé pour la cristallisation au moins de la peau extérieure de grains d'un granulat amorphe de matière plastique, de préférence polyester thermoplastique (PETP), dans lequel du gaz chaud est amené à un entonnoir agitateur avec une température d'entrée située au-dessus de la température de cristallisation du granulat et est dirigé dans le contre-courant à travers le granulat descendant à travers l'entonnoir agitateur, le granulat étant chauffé à la température de cristallisation et puis prélevé, caractérisé en ce que la température de prélèvement du granulat est enregistrée et la vitesse de prélèvement du granulat hors de l'entonnoir agitateur (20) est commandée de manière que la température d'entrée du gaz chaud se situe au-dessus d'une valeur prédéfinie de la température de prélèvement du granulat.

3. Procédé selon la revendication 1 ou 2, caractérisé en ce que de l'air est utilisé comme gaz chaud.

4. Procédé selon la revendication 1 ou 2, caractérisé en ce que de l'azote est utilisé comme gaz chaud.

5. Procédé selon l'une des revendications 1 à 4, caractérisé en ce que la température d'entrée du gaz chaud est maintenue dans une gamme d'environ 140° Celsius.

6. Dispositif pour la réalisation du procédé selon une des revendications 1 à 5 avec un entonnoir agitateur (20) qui présente en haut une ouverture de remplissage du granulat (22) ainsi qu'une sortie de gaz chaud (24) et en bas une entrée de gaz chaud (26) ainsi qu'en-dessous de l'entrée de gaz chaud une tubulure de prélèvement du granulat (28) et à l'intérieur un agitateur (30), caractérisé en ce que qu'une sonde de température (18) est fixée sur l'entonnoir agitateur, dont la tête de mesure (19) est disposée dans le granulat à proximité de l'entrée de gaz chaud (26), et en ce qu'une commande (100) est prévue, laquelle enregistre les signaux de sortie de la sonde de température (18) et commande la quantité de chaleur amenée par le gaz chaud ou la vitesse de prélèvement du granulat de l'entonnoir agitateur en fonction des signaux de sortie.

7. Dispositif selon la revendication 6, caractérisé en ce que l'entonnoir agitateur (20) possède une région intérieure rétrécie pour le passage du granulat (10) ainsi que du gaz chaud à proximité de l'entrée de gaz chaud (26).

8. Dispositif selon la revendication 7, caractérisé en ce que l'entonnoir agitateur présente à l'intérieur une paroi fixe (42) , en forme d'entonnoir avec une ouverture de passage centrale qui s'étend en oblique vers l'intérieur et le bas depuis la surface intérieure de la paroi extérieure (44) de l'entonnoir agitateur (20).

9. Dispositif selon la revendication 7 ou 8, caractérisé en ce qu'à l'intérieur de l'entonnoir agitateur (20) est fixée une paroi (52) fixée sur l'agitateur à une distance de la paroi extérieure pour former la région intérieure rétrécie, laquelle entoure un noyau (50) exempt de granulat (10) et de gaz chaud.

10. Dispositif selon la revendication 8 ou 9, caractérisé en ce que la paroi (52) fixée sur l'agitateur est plus raide que l'angle de déversement du granulat à cristalliser (10) dans l'entonnoir agitateur.

11. Dispositif selon l'une des revendications 9 ou 10, caractérisé en ce que l'entonnoir agitateur présente une partie supérieure cylindrique (62) qui est fixée sur une base (70) arrivant coniquement vers la tubulure de prélèvement du granulat (28), où à travers l'entonnoir agitateur s'étend axialement un arbre (80) sur lequel sont fixés des palettes d'agitation (82, 84, ...) écartées axialement, ainsi qu'un double cône (55) dont l'extrémité inférieure se trouve environ au niveau de la région intérieure rétrécie.

12. Dispositif selon la revendication 11, caractérisé en ce que le double cône entourant le noyau (50) est dans la partie supérieure (54) plus courte axialement que dans la partie inférieure (52).

13. Dispositif selon la revendication 11 ou 12, caractérisé en ce qu'au moins une des palettes d'agitation (92) est disposée dans l'ouverture de passage (46) de la paroi en forme d'entonnoir (42).

14. Dispositif selon l'une des revendications 8 à 13, caractérisé en ce que la paroi fixe (42) est fixée au-dessus de l'entrée de gaz chaud (26) sur la paroi extérieure (44) et est isolée thermiquement sur sa face inférieure.

15. Dispositif selon l'une des revendications 8 à 14, caractérisé en ce que la paroi fixe (42) est inclinée d'un angle d'environ 45° par rapport à la paroi extérieure.

16. Dispositif selon une des revendications 9 à 15, caractérisé en ce que la paroi (52) fixée sur l'agitateur est inclinée d'un angle d'environ 30° par rapport à l'axe de l'entonnoir agitateur (20).

17. Dispositif selon l'une des revendications 8 à 16, caractérisé en ce que le diamètre de l'ouverture de passage (46) est environ la moitié de celui de la région intérieure rétrécie de l'entonnoir agitateur (20).

18. Dispositif selon l'une des revendications 6 à 17, caractérisé en ce que la sonde de température (18) est disposée peu en-dessous de la région intérieure rétrécie.

19. Dispositif selon l'une des revendications 6 à 18, caractérisé en ce qu'une deuxième sonde de température (16) est fixée sur l'entonnoir agitateur (20) peu au-dessus de la tubulure de prélèvement du granulat (28).

20. Dispositif selon l'une des revendications 6 à 19, caractérisé en ce qu'une troisième sonde de température (14) est prévue devant l'entrée de gaz chaud et est raccordée à la commande (100).
